# DEMANDE DE BREVET EUROPEEN

(11) **EP 1 544 065 A1**
(43) Date de publication de la demande: **22.06.2005**
(21) Numéro de dépôt: 04293030.5
(22) Date de dépôt: 17.12.2004
(51) Int. Cl.: B60R 25/02

(54) **Système de contrôle de l'alimentation de puissance en énergie électrique d'organes fonctionnels d'un réseau de bord de véhicule automobile**

(30) Priorité: 19.12.2003 FR 0315106
(71) Demandeur: Peugeot Citroen Automobiles S.A., 78140 Vélizy Villacoublay (FR)
(72) Inventeur: Burguburu, Philippe, 78000 Versailles (FR)
(74) Mandataire: Habasque, Etienne Joel Jean-François

(57) **Abrégé**

Ce système de contrôle de l'alimentation de puissance en énergie électrique d'organes fonctionnels (1) d'un réseau de bord de véhicule automobile, raccordés à une source d'alimentation en énergie électrique (5) embarquée à bord du véhicule, à travers une ligne d'alimentation de puissance (4) et des moyens de commande (3) de leur alimentation, le véhicule étant équipé de moyens (11) de commande d'un mécanisme d'antivol (6) à pêne de verrouillage de la colonne, déplaçable entre une position active et une position escamotée, est caractérisé en ce que la ligne d'alimentation de puissance (4) des organes fonctionnels comporte des moyens (15) formant interrupteur pilotable, aux bornes desquels sont connectés en parallèle des moyens (16) de limitation de la puissance disponible pour l'alimentation des organes fonctionnels, les moyens formant interrupteur (15) étant pilotés à l'ouverture ou à la fermeture selon que le mécanisme d'antivol (6) est piloté en position de verrouillage ou de déverrouillage respectivement.

## Description

La présente invention concerne un système de contrôle de l'alimentation de puissance en énergie électrique d'organes fonctionnels d'un réseau de bord d'un véhicule automobile.

On connaît déjà dans l'état de la technique des systèmes de ce type dans lesquels les organes fonctionnels sont reliés à une source d'alimentation en énergie électrique embarquée à bord du véhicule et formée par exemple par une batterie, à travers une ligne d'alimentation de puissance et des moyens de commande de leur alimentation.

Les véhicules sont également équipés de moyens de commande d'un mécanisme d'antivol à pêne de verrouillage de la colonne, déplaçable entre une position active de blocage et une position escamotée.

Dans ce contexte, il est connu que l'introduction des réseaux multiplexés de transmission d'informations dans le domaine de la carrosserie automobile a permis de simplifier les réseaux électriques d'alimentation des organes fonctionnels, notamment quant au nombre de fils disposés dans l'habitacle, mais en contrepartie, a introduit un paramètre nouveau qui est la présence d'une distribution permanente de la tension de la batterie et de la puissance correspondante, sur tout le réseau de bord et dans la plupart des organes fonctionnels multiplexés.

En effet, dans les anciennes architectures électriques, c'est-à-dire pour les véhicules non multiplexés, le fait de couper le contact avait un double rôle, à savoir d'une part de couper la distribution de la tension de la batterie sur le réseau de bord et d'autre part, au retrait de la clé de contact, de bloquer la colonne de direction suivant les exigences réglementaires, afin de constituer un mécanisme d'antivol.

Cette action avait pour effet de rassurer le conducteur du véhicule, puisque le réseau de bord était hors tension et la direction du véhicule verrouillée.

Cependant, ceci n'est plus le cas avec les générations de véhicules notamment multiplexés ou comportant des organes de forte puissance alimentés en permanence par la batterie, pour lesquelles le fait de couper le contact du véhicule correspond à une demande d'action vers un calculateur central qui, suivant ses consignes internes, procède, immédiatement ou avec un certain retard, à la mise en veille des organes fonctionnels du véhicule, mais pas à la suppression de la distribution de la puissance de la batterie sur la plupart des organes.

Dans ces véhicules dits multiplexés, et avec les nouveaux types de mécanismes d'antivol, les organes multiplexés sont la plupart du temps en veille, c'est-à-dire dans un état où seule la partie de surveillance de la fonction est opérationnelle, mais ils sont réveillés pendant une courte partie de la vie du véhicule, c'est-à-dire lorsque les occupants utilisent les organes multiplexés ou que le moteur de celui-ci est en fonctionnement.

Durant la phase de veille, seule une consommation très faible de courant est nécessaire pour assurer cette fonction de surveillance, alors que toute la puissance nécessaire au fonctionnement de chaque organe est disponible sur le réseau.

Le but de l'invention est donc de résoudre ces problèmes.

A cet effet, l'invention a pour objet un système de contrôle de l'alimentation de puissance en énergie électrique d'organes fonctionnels d'un réseau de bord de véhicule automobile, raccordés à une source d'alimentation en énergie électrique embarquée à bord du véhicule, à travers une ligne d'alimentation de puissance et des moyens de commande de leur alimentation, le véhicule étant équipé de moyens de commande d'un mécanisme d'antivol à pêne de verrouillage de la colonne, déplaçable entre une position active et une position escamotée, caractérisé en ce que la ligne d'alimentation de puissance des organes fonctionnels comporte des moyens formant interrupteur pilotable, aux bornes desquels sont connectés en parallèle des moyens de limitation de la puissance disponible pour l'alimentation des organes fonctionnels, les moyens formant interrupteur étant pilotés à l'ouverture ou à la fermeture selon que le mécanisme d'antivol est piloté en position de verrouillage ou de déverrouillage respectivement.

Suivant d'autres caractéristiques :
- le mécanisme à pêne de verrouillage comporte un actionneur électrique adapté pour manoeuvrer ce mécanisme ;
- les moyens formant interrupteur sont mécaniques et manoeuvrés par l'actionneur électrique ;
- les moyens de commande du mécanisme à pêne comportent une portion de calculateur dont l'alimentation en énergie est assurée à partir de la source d'alimentation par une ligne distincte de la ligne d'alimentation de puissance ;
- les moyens formant interrupteur sont électroniques à semi-conducteur et pilotés par la portion de calculateur ;
- les moyens formant interrupteur sont pilotés à l'ouverture lorsque le courant dans la ligne d'alimentation de puissance est inférieur à une valeur prédéterminée ;
- les moyens de limitation de puissance comportent une impédance ;
- l'impédance est formée par une résistance.

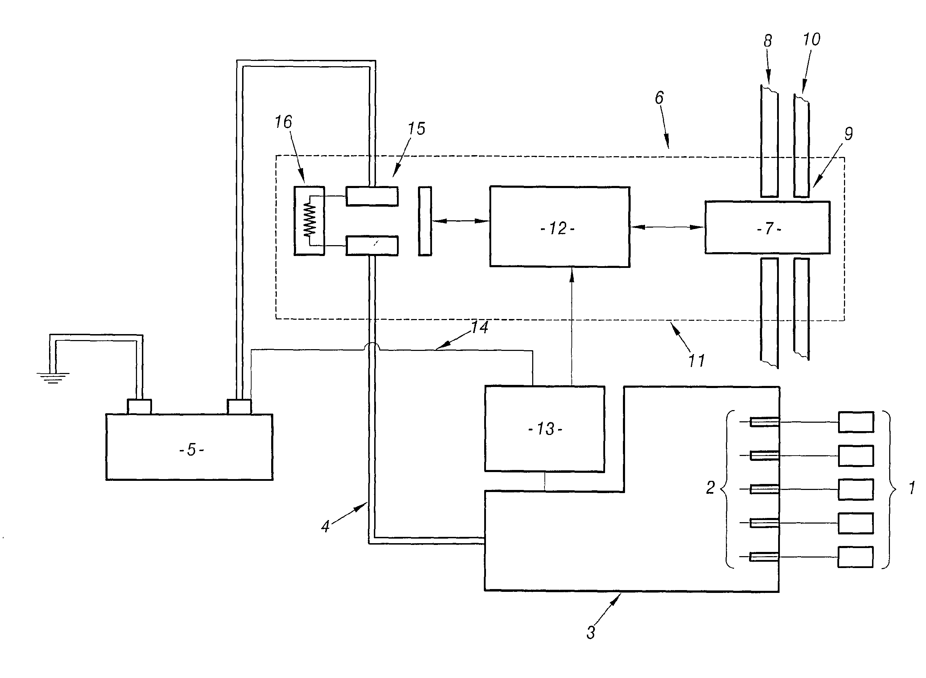

L'invention sera mieux comprise à la lecture de la description qui va suivre, donnée uniquement à titre d'exemple et faite en se référant au dessin annexé, qui représente un schéma synoptique illustrant la structure et le fonctionnement d'un système de contrôle selon l'invention.

On a en effet illustré sur cette figure, un système de contrôle de l'alimentation de puissance en énergie électrique d'organes fonctionnels d'un réseau de bord d'un véhicule automobile.

Ces organes sont par exemple désignés par la référence générale 1 sur cette figure et sont raccordés à travers des moyens de protection tels que par exemple des fusibles, désignés par la référence générale 2, à des moyens de commande de leur fonctionnement désignés par la référence générale 3 et formés par exemple par un calculateur de contrôle.

Ces moyens de commande sont alors reliés par l'intermédiaire d'une ligne d'alimentation de puissance désignée par la référence générale 4, à une source d'alimentation en énergie électrique embarquée à bord du véhicule, formée par exemple par une batterie de stockage d'énergie, désignée par la référence générale 5.

Les véhicules automobiles sont également munis d'un mécanisme à pêne de verrouillage de l'ensemble de colonne de direction, désigné par la référence générale 6 sur cette figure.

En général, ces mécanismes comportent un pêne de verrouillage désigné par la référence générale 7, adapté pour s'étendre à travers un corps de colonne de direction désigné par la référence générale 8, dans une fente de verrouillage 9 d'un arbre de direction 10, pour assurer lorsque ce pêne est en position active de verrouillage, un blocage de l'arbre par rapport au reste de l'ensemble de colonne de direction et donc mettre en action une fonction d'antivol du véhicule.

Ce pêne est alors monté déplaçable entre cette position active et une position escamotée, permettant l'utilisation normale du véhicule, par des moyens de commande désignés par la référence générale 11 sur cette figure.

Dans l'exemple de réalisation représenté sur cette figure, ces moyens de commande comprennent par exemple un actionneur électrique désigné par la référence générale 12, dont le pilotage est assuré par une portion 13 du calculateur 3, raccordée à la source d'alimentation en énergie électrique 5 à travers une ligne d'alimentation 14, distincte de la ligne d'alimentation de puissance 4 des organes fonctionnels.

Le calculateur 3 peut par exemple être formé par un calculateur central de carrosserie du véhicule, dont une partie spécifique est associée à la commande du mécanisme d'antivol du véhicule.

Selon l'invention, la ligne de puissance d'alimentation 4 des organes fonctionnels du véhicule comporte des moyens formant interrupteur pilotable, désignés par la référence générale 15 sur cette figure, aux bornes desquels sont connectés en parallèle des moyens de limitation de la puissance disponible pour l'alimentation de ces organes fonctionnels comprenant par exemple une impédance formée par exemple par une résistance 16.

Les moyens formant interrupteur pilotable sont mécaniques dans l'exemple de réalisation illustré sur cette figure, et sont pilotés par l'actionneur électrique 12 du mécanisme à pêne d'antivol sous le contrôle des moyens de commande, vers une position d'ouverture de ces moyens formant interrupteur lorsque ce mécanisme à pêne est en position de blocage de la colonne de direction, et une position de fermeture de ceux-ci lorsque ce mécanisme à pêne de verrouillage est en position de déverrouillage de la colonne.

On conçoit alors que lorsque le mécanisme à pêne est en position de verrouillage de l'ensemble de colonne, les moyens formant interrupteur 15 sont ouverts.

L'alimentation des organes fonctionnels se fait alors à travers la résistance 16 de limitation de la puissance disponible sur la ligne d'alimentation 4.

Par contre, lorsque le mécanisme à pêne est en position de déverrouillage de l'ensemble de colonne, les moyens formant interrupteur 15 sont en position de fermeture et l'alimentation des organes fonctionnels est alors assurée normalement à travers ces moyens formant interrupteur.

On conçoit alors que lorsque le véhicule est en phase de veille, phase que l'on peut assimiler à l'ancienne notion de contact coupé du véhicule, il est possible d'intervenir comme autrefois sur le réseau général de bord de carrosserie du véhicule, sans provoquer d'incident sérieux, en délivrant une puissance limitée suffisante pour maintenir ces organes en état de veille, mais insuffisante pour engendrer un incident sérieux sur les organes ou le réseau en général, ces incidents pouvant se produire en l'absence d'utilisateur à bord du véhicule.

Il va de soi bien entendu que d'autres modes de réalisation encore peuvent être envisagés.

Ainsi, par exemple, la portion 13 de calculateur associée au mécanisme à pêne et aux moyens formant interrupteur, peut être directement intégrée dans le système d'antivol.

Son alimentation peut alors être assurée par connexion de celle-ci à la ligne d'alimentation de puissance en amont des moyens formant interrupteur 15.

De même, cette portion de calculateur peut être adaptée pour ne piloter à l'ouverture les moyens formant interrupteur que lorsque le courant circulant dans la ligne d'alimentation de puissance est inférieure à une valeur de seuil prédéterminée et par exemple la plus proche possible de zéro, lorsqu'aucun organe fonctionnel connecté n'est activé, pour éviter de faire fonctionner ces moyens formant interrupteur en sectionneur de puissance.

On conçoit alors que grâce à une telle structure, il est possible de profiter de la présence d'une commande différente du mécanisme d'antivol de direction du véhicule qui passe de manuelle par une clé, à électrique par une alimentation pilotée par un calculateur de bord du véhicule, pour gérer, par l'antivol, comme dans les architectures électriques classiques, la puissance disponible dans le réseau de bord de carrosserie du véhicule et limiter au sein même de ce mécanisme antivol, la puissance disponible sur le réseau de bord lorsque ce dernier est en phase de veille.

A cet effet, l'alimentation des moyens de commande de puissance des organes fonctionnels passe par ce mécanisme d'antivol et plus particulièrement par des moyens formant interrupteur de ceux-ci, qui disposent donc en interne, d'une impédance telle qu'une résistance de limitation de puissance disponible, faisant office de coupure de contact comme dans les anciennes générations de véhicule, c'est-à-dire en laissant le réseau de bord du véhicule se mettre en veille et en éliminant toute possibilité de mise à disposition de puissance importante dans l'habitacle avec la sécurité que cela représente.

Bien entendu, d'autres modes de réalisation encore peuvent être envisagés.

Ainsi, des moyens de limitation de puissance autres qu'une résistance peuvent être envisagés.

De même, les moyens formant interrupteur peuvent être formés par des moyens mécaniques ou électroniques à semi-conducteur par exemple.

Dans ce cas, ces moyens sont pilotés par la portion 13 de calculateur, à l'ouverture et à la fermeture.

## Revendications

1. Système de contrôle de l'alimentation de puissance en énergie électrique d'organes fonctionnels (1) d'un réseau de bord de véhicule automobile, raccordés à une source d'alimentation en énergie électrique (5) embarquée à bord du véhicule, à travers une ligne d'alimentation de puissance (4) et des moyens de commande (3) de leur alimentation, le véhicule étant équipé de moyens (11) de commande d'un mécanisme d'antivol (6) à pêne de verrouillage de la colonne, déplaçable entre une position active et une position escamotée, **caractérisé en ce que** la ligne d'alimentation de puissance (4) des organes fonctionnels comporte des moyens (15) formant interrupteur pilotable, aux bornes desquels sont connectés en parallèle des moyens (16) de limitation de la puissance disponible pour l'alimentation des organes fonctionnels, les moyens formant interrupteur (15) étant pilotés à l'ouverture ou à la fermeture selon que le mécanisme d'antivol est piloté en position de verrouillage ou de déverrouillage respectivement.

2. Système selon la revendication 1, **caractérisé en ce que** le mécanisme à pêne de verrouillage (6) comporte un actionneur électrique (12) adapté pour manoeuvrer ce mécanisme.

3. Système selon la revendication 2, **caractérisé en ce que** les moyens formant interrupteur (15) sont mécaniques et manoeuvrés par l'actionneur électrique (12).

4. Système selon la revendication 1, 2 ou 3, **caractérisé en ce que** les moyens de commande du mécanisme à pêne comportent une portion de calculateur (13) dont l'alimentation en énergie est assurée à partir de la source d'alimentation (5) par une ligne (14) distincte de la ligne d'alimentation de puissance (4).

5. Système selon les revendications 1, 2 et 4, **caractérisé en ce que** les moyens formant interrupteur (15) sont électroniques à semi-conducteur et pilotés par la portion (13) de calculateur.

6. Système selon l'une quelconque des revendications précédentes, **caractérisé en ce que** les moyens formant interrupteur (15) sont pilotés à l'ouverture lorsque le courant dans la ligne d'alimentation de puissance (4) est inférieur à une valeur prédéterminée.

7. Système selon l'une quelconque des revendications précédentes, **caractérisé en ce que** les moyens de limitation de puissance comportent une impédance (16).

8. Système selon la revendication 7, **caractérisé en ce que** l'impédance est formée par une résistance (16).
